# EUROPEAN PATENT APPLICATION

(11) **EP 4 467 838 A1**
(43) Date of publication of application: **27.11.2024**
(21) Application number: 22926515.2
(22) Date of filing: 21.02.2022
(51) Int. Cl.: F16F 9/50

(54) **AIR SPRING, VIBRATION ISOLATION DEVICE, SENSOR ASSEMBLY, VIBRATION ISOLATION CONTROL METHOD, AND VEHICLE**

(71) Applicant: Huawei Technologies Co., Ltd., Shenzhen, Guangdong 518129 (CN)
(72) Inventor: YANG, Yu, Shenzhen, Guangdong 518129 (CN); ZHOU, Wei, Shenzhen, Guangdong 518129 (CN); ZHOU, Jie, Shenzhen, Guangdong 518129 (CN)
(74) Representative: MERH-IP Matias Erny Reichl Hoffmann Patentanwälte PartG mbB
(86) International application number: PCT/CN2022/077074
(87) International publication number: WO 2023/155188

(57) **Abstract**

This application relates to the vibration control field, and in particular, to vibration control technologies in the field of new energy vehicles and intelligent vehicles, and discloses an air spring, a vibration isolation apparatus, a sensor assembly, a vibration isolation control method, and a vehicle. The air spring includes an airway and at least two air chambers, where the at least two air chambers include a first air chamber and a second air chamber, the first air chamber and the second air chamber are distributed at an interval along the airway, the first air chamber is connected to the airway by using a first control valve, and the second air chamber is connected to the airway by using a second control valve. According to the air spring in embodiments of this application, when a target object such as a sensor is vibrated, the air spring can slow down lateral vibration of the target object such as the sensor, to reduce mechanical fatigue of the sensor, reduce a fracture risk and a performance degradation speed of the sensor assembly, prolong a service life of the sensor, reduce a quantity of replacement times, reduce replacement costs, and reduce impact of vibration on measurement precision of the sensor.

## Description

### TECHNICAL FIELD

This application relates to the vibration control field, and in particular, to an air spring, a vibration isolation apparatus, a sensor assembly, a vibration isolation control method, and a vehicle.

### BACKGROUND

Currently, sensors used to sense a surrounding environment in an unmanned driving process are usually disposed on a self-driving vehicle. In this way, the vehicle may automatically adjust a driving status of the vehicle based on sensor data obtained by the sensors. The sensors may be laser radars or the like.

A large-scale unmanned engineering operation vehicle often travels on unstructured roads such as field roads, wading mud roads, and mining roads. A road surface of an unstructured road is not even, and the vehicle vibrates or even vibrates violently due to the uneven road surface. In addition, currently, most sensors are directly connected to a body or an external support suspension beam of the large-scale unmanned engineering operation vehicle. Therefore, the sensors on the vehicle also vibrate with vibration of the vehicle. In this way, long-time mechanical vibration causes problems such as mechanical fatigue, structural fracture, and performance degradation of the sensors. As a result, service lives of the sensors are shortened, and measurement precision of the sensors is reduced.

For example, a traveling environment of an unmanned mining vehicle (such as a wide-body dump truck) in a mine is poor. The wide-body dump truck vibrates under external force. Sensors on the wide-body dump truck are directly connected to a steel plate of a body of the wide-body dump truck. A suspension system of the wide-body dump truck is a steel spring, with poor shock-absorbing performance. The sensors, especially built-in mechanical elements such as a laser radar and a millimeter-wave radar, and a micro-electro-mechanical system (Micro-Electro-Mechanical System, MEMS) element are likely affected by vibration. The sensors on the wide-body dump truck also vibrate with vibration of the wide-body dump truck, and detection precision of the sensors, especially the laser radar, is affected by the vibration. Long-time vibration may cause problems such as mechanical fatigue, structural fracture, and performance degradation of the sensors. As a result, service lives of the sensors are shortened, and replacement costs of the sensors are increased.

### SUMMARY

Embodiments of this application provide an air spring, a vibration isolation apparatus, a sensor assembly, a vibration isolation control method, and a vehicle.

According to a first aspect, an embodiment of this application provides an air spring, including an airway and at least two air chambers, where the at least two air chambers include a first air chamber and a second air chamber, the first air chamber and the second air chamber are distributed at an interval along the airway, the first air chamber is connected to the airway by using a first control valve, and the second air chamber is connected to the airway by using a second control valve.

The air spring may be a third air spring in a specific embodiment, for example, a third air spring 23a and a third air spring 24a.

According to the air spring in this embodiment of this application, when a target object such as a sensor is vibrated, the air spring can slow down lateral vibration of the target object such as the sensor, to reduce mechanical fatigue of the sensor, reduce a fracture risk and a performance degradation speed of the sensor assembly, prolong a service life of the sensor, reduce a quantity of replacement times, reduce replacement costs, and reduce impact of vibration on measurement precision of the sensor.

In a possible implementation of the first aspect, the at least two air chambers further include a third air chamber and a fourth air chamber, where the first air chamber, the second air chamber, the third air chamber, and the fourth air chamber are evenly distributed along the airway, the third air chamber is connected to the airway by using a third control valve, and the fourth air chamber is connected to the airway by using a fourth control valve.

In this embodiment of this application, the first air chamber, the second air chamber, the third air chamber, and the fourth air chamber are evenly distributed along the airway, to facilitate decomposition and calculation of a physical quantity in a vibration control process, effectively improve vibration control precision, and further improve calibration efficiency of the vibration isolation apparatus or the air spring.

In a possible implementation of the first aspect, the airway is annular, and the first air chamber, the second air chamber, and the third air chamber are evenly distributed along a circumferential direction of the airway.

In a possible implementation of the first aspect, the airway is further provided with an intake valve and an exhaust valve, and the intake valve and the exhaust valve are disposed on a same side of a circumferential diameter of the airway.

The intake valve and the exhaust valve are disposed on the same side of the circumferential diameter of the airway, which helps reduce a volume of the apparatus and simplify and install intake and exhaust pipes.

For example, an intake valve 232a and an exhaust valve 233a are disposed on a same side of a diameter of the third air spring 23a. In this way, to some extent, a connection distance between the intake valve 232a and an air supply apparatus and a connection distance between the exhaust valve 233a and the air supply apparatus may be shortened, a volume of the vibration isolation apparatus is reduced, and installation is convenient.

In a possible implementation of the first aspect, each of the at least two air chambers is provided with a barometric pressure sensor.

The barometric pressure sensor is configured to measure a barometric pressure of each air chamber.

In a possible implementation of the first aspect, the apparatus further includes a groove part, where the groove part is disposed on a perpendicular bisector between two adjacent air chambers in the at least two air chambers.

Wiring harness of the sensor may pass through the groove part and disposed on the perpendicular bisector, to simplify a calibration parameter, improve calibration efficiency, simplify a vibration control calculation parameter, and improve vibration control precision.

According to a second aspect, an embodiment of this application provides a vibration isolation apparatus, where the vibration isolation apparatus includes a first air spring and a second air spring, where the first air spring includes a first airway, a first air chamber, and a second air chamber, where the first air chamber and the second air chamber are distributed at an interval along the first airway; the first air chamber is connected to the first airway by using a first control valve, and the second air chamber is connected to the first airway by using a second control valve; and the second air spring is configured to attenuate a vibration component perpendicular to a plane on which the first air spring is located.

The first air spring may be a third air spring in a specific embodiment, for example, a third air spring 24a.

The second air spring may be a first air spring and a second air spring in a specific embodiment, for example, a first air spring 21a and a second air spring 22a.

In a possible implementation of the first aspect, the first air spring further includes a third air chamber and a fourth air chamber.

The third air chamber is connected to the first airway by using a third control valve, and the fourth air chamber is connected to the first airway by using a fourth control valve; the first airway is annular, and the first air chamber, the second air chamber, the third air chamber, and the fourth air chamber are evenly distributed along a circumferential direction of the first airway; and the first air chamber, the second air chamber, the third air chamber, and the fourth air chamber are all provided with a barometric pressure sensor.

In a possible implementation of the first aspect, the first airway is further provided with a first intake valve and a first exhaust valve, and the first intake valve and the first exhaust valve are disposed on a same side of a circumferential diameter of the first airway.

In a possible implementation of the first aspect, the first air spring and the second air spring are of an integral structure; or the first air spring is fixedly connected to the second air spring.

A manner of the fastened connection may include a detachable fastened connection and a non-detachable fastened connection. The detachable fastened connection may be a bolt connection, and the non-detachable fastened connection may be adhesive, but is not limited thereto.

The integral structure can improve connection reliability, and reduce a volume and costs of a connection part. The detachable fastened connection may flexibly replace types of the first air spring, the second air spring, and the third air spring, and has better adaptability. For the non-detachable fastened connection, in a manufacturing stage before the vibration isolation apparatus is delivered from a factory, types of the first air spring, the second air spring, and the third air spring are determined.

In a possible implementation of the first aspect, the apparatus further includes a third air spring, a fourth air spring, and a bracket, where the second spring, the first spring, the third spring, and the fourth spring are sequentially arranged, the second air spring is fixedly connected to the bracket, and the fourth air spring is fixedly connected to the bracket; the third air spring includes a second airway, a fifth air chamber, a sixth air chamber, a seventh air chamber, and an eighth air chamber, where the second airway is annular, the second airway is further provided with a second intake valve and a second exhaust valve, and the second intake valve and the second exhaust valve are disposed on a same side of a circumferential diameter of the second airway; the fifth air chamber, the sixth air chamber, the seventh air chamber, and the eighth air chamber are evenly distributed along a circumferential direction of the second airway, and the fifth air chamber, the sixth air chamber, the seventh air chamber, and the eighth air chamber are all provided with a barometric pressure sensor; and the fourth air spring is configured to attenuate a vibration component perpendicular to a plane on which the third air spring is located, and the third air spring is fixedly connected to the fourth air spring.

In some implementations, the bracket may include a structure formed by an iron frame and a support suspension beam, but is not limited to the.

The third air spring may be a third air spring in a specific embodiment, for example, a third air spring 24a.

The fourth air spring may be a first air spring and a second air spring in a specific embodiment, for example, a first air spring 21a and a second air spring 22a.

In a possible implementation of the first aspect, the bracket is configured to fixedly connect the vibration isolation apparatus to a vehicle.

In a possible implementation of the first aspect, both the second air spring and the fourth air spring are single convoluted air springs.

According to a third aspect, an embodiment of this application provides a sensor assembly, including a vibration isolation apparatus and a sensor.

The vibration isolation apparatus includes a first air spring and a second air spring, the first air spring is sleeved on a side surface of the sensor, the second air spring is disposed on a first end of the sensor, and the second air spring is configured to attenuate a vibration component perpendicular to a plane on which the first air spring is located; the first air spring includes a first airway, a first air chamber, a second air chamber, a third air chamber, and a fourth air chamber, where the first air chamber, the second air chamber, the third air chamber, and the fourth air chamber are evenly distributed along the airway; and the first air chamber is connected to the first airway by using a first control valve, the second air chamber is connected to the first airway by using a second control valve, the third air chamber is connected to the airway by using a third control valve, and the fourth air chamber is connected to the airway by using a fourth control valve.

The first air spring may be a third air spring in a specific embodiment, for example, a third air spring 24a.

The second air spring may be a first air spring and a second air spring in a specific embodiment, for example, a first air spring 21a and a second air spring 22a.

In a possible implementation of the first aspect, a third air spring and a fourth air spring are further included, where the second spring, the first spring, the third spring, and the fourth spring are sequentially arranged, the third air spring is sleeved on a side surface of the sensor, and the fourth air spring is disposed on a second end of the sensor; the third air spring includes a second airway, a fifth air chamber, a sixth air chamber, a seventh air chamber, and an eighth air chamber, where the second airway is annular, the second airway is further provided with a second intake valve and a second exhaust valve, and the second intake valve and the second exhaust valve are disposed on a same side of a circumferential diameter of the second airway; the fifth air chamber, the sixth air chamber, the seventh air chamber, and the eighth air chamber are evenly distributed along a circumferential direction of the second airway, and the fifth air chamber, the sixth air chamber, the seventh air chamber, and the eighth air chamber are all provided with a barometric pressure sensor; and the fourth air spring is configured to attenuate a vibration component perpendicular to a plane on which the third air spring is located, and the third air spring is fixedly connected to the fourth air spring.

The third air spring may be a third air spring in a specific embodiment, for example, a third air spring 24a. The fourth air spring may be a first air spring and a second air spring in a specific embodiment, for example, a first air spring 21a and a second air spring 22a.

According to a fourth aspect, an embodiment of this application provides a vibration isolation control method, where the method is applied to a vibration isolation control system, the vibration isolation control system includes an electronic control unit and an air spring, and the air spring includes an airway and at least two air chambers, where the at least two air chambers include a first air chamber and a second air chamber; the first air chamber and the second air chamber are distributed at an interval along the airway; and the first air chamber is connected to the airway by using a first control valve, and the second air chamber is connected to the airway by using a second control valve.

The method includes:
obtaining, by the electronic control unit, an acceleration of the sensor;
decomposing, by the electronic control unit, the acceleration to a component in a preset direction, and determining, by the electronic control unit, expected rigidity and damping of the air chamber based on the component in the preset direction;
determining an expected opening of each solenoid valve based on the expected rigidity and the damping; and
sending a corresponding solenoid valve opening adjustment instruction to each solenoid valve based on the expected opening.

According to a fourth aspect, an embodiment of this application provides a vehicle. An air spring is disposed on the vehicle, and the air spring is the air spring in any one of the possible implementations of the first aspect.

According to a fifth aspect, an embodiment of this application provides a computer-readable storage medium. The computer-readable storage medium stores instructions, and when the instructions are executed on an electronic device, the electronic device is enabled to perform the vibration isolation control method in the possible implementations of the fourth aspect.

### BRIEF DESCRIPTION OF DRAWINGS

FIG. 1 is a schematic exploded diagram of a sensor assembly according to some embodiments of this application;
FIG. 2A is a front view of an assembly state of a sensor assembly shown in FIG. 1 according to some embodiments of this application;
FIG. 2B is a left view of an assembly state of a sensor assembly shown in FIG. 1 according to some embodiments of this application;
FIG. 2C is a top view of an assembly state of a sensor assembly shown in FIG. 1 according to some embodiments of this application;
FIG. 3A is a top view of a third air spring 23a in FIG. 1;
FIG. 3B is a sectional view of a third air spring 23a in a direction A-A in FIG. 1 according to some embodiments of this application;
FIG. 3C is a top view of a third air spring 24a in FIG. 1;
FIG. 3D is a schematic diagram of a vibration reduction principle of a third air spring 24a in FIG. 3C;
FIG. 4 is a schematic diagram of a vibration isolation system according to some embodiments of this application;
FIG. 5 is a schematic flowchart of a vibration isolation control method of a vibration isolation apparatus 20a corresponding to the vibration isolation apparatus 20a and FIG. 4 according to some embodiments of this application;
FIG. 6 is a schematic diagram of a principle in which an electronic control unit 30 decomposes an acceleration of a sensor 10a to components in directions of an x-axis, a y-axis, and a z-axis;
FIG. 7 is a schematic diagram of a principle of converting an acceleration in an x-axis direction and an acceleration in a y-axis direction to an acceleration component in an air chamber center direction of an xy plane on which a third air spring 23a is located according to some embodiments of this application;
FIG. 8 is a schematic diagram of a principle of adjusting a barometric pressure of an air chamber according to a control valve opening adjustment instruction according to some embodiments of this application;
FIG. 9 is a top view of an unmanned mining vehicle according to some embodiments of this application; and
FIG. 10 is a schematic diagram of a structure of a connection among a laser radar 10a, a vibration isolation apparatus 20a, and an unmanned mining vehicle 1 according to some embodiments of this application.

### Descriptions of reference numerals:

20a: vibration isolation apparatus; 21a: first air spring; 22a: second air spring; 23a: third air spring; 24a: third air spring; 211a: positioning hole; 212a: positioning hole; 213a: intake valve; 232a: intake valve; 102a: top protective cover; 103a: laser radar operating area; 104a: harness plug; 105a: bottom protective cover; 241a: connection part; 242a: opening; 243a: exhaust valve; 221a: positioning hole; 222a: positioning hole; 223a: intake valve; 214a: positioning hole; 234a: third air chamber; 235a: third air chamber; 236a: third air chamber; 237a: third air chamber; 238a: airway; 202a: control valve; 245a: third air chamber; 246a: third air chamber; 247a: third air chamber; 248a: third air chamber; 30: electronic control unit; 201a: barometric pressure sensor; 40: air supply apparatus; 10a: sensor; 101a: inertial measurement unit; 231a: connection part; 214a: exhaust valve; 1: unmanned mining vehicle; 50: vehicle head; 30: iron frame; 60: support suspension beam.

### DESCRIPTION OF EMBODIMENTS

The following describes implementations of this application by using specific embodiments. A person skilled in the art may easily learn of other advantages and effects of this application based on content disclosed in this specification.

Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

It should be noted that, in descriptions of embodiments of this application, it should be noted that, unless otherwise specified and limited, terms "installation" and "connection" should be understood in a broad sense. For example, the "connection" may be a detachable connection, or may be a non-detachable connection, or may be a direct connection, or may be an indirect connection through an intermediary. It should be noted that, in this specification, reference numerals and letters in the following accompanying drawings represent similar items. Therefore, once an item is defined in an accompanying drawing, the item does not need to be further defined or interpreted in the following accompanying drawings. In descriptions of this application, it should be noted that orientation or location relationships indicated by terms "center", "above", "below", "left", "right", "vertical", "horizontal", "inner", "outer", and the like are orientation or location relationships based on the accompanying drawings, and are merely intended for conveniently describing this application and simplifying descriptions, rather than indicating or implying that an apparatus or an element in question needs to have a specific orientation or needs to be constructed and operated in a specific orientation, and therefore cannot be construed as a limitation on this application. In addition, terms "first" and "second" are merely used for a purpose of description, and shall not be understood as an indication or implication of relative importance.

To resolve the technical problem in the background, an embodiment of this application provides a vibration isolation apparatus. The vibration isolation apparatus includes a first vibration isolation apparatus and a second vibration isolation apparatus. The first vibration isolation apparatus is configured to be disposed in a first direction of a target object, and the first vibration isolation apparatus is configured to slow down a vibration component of the target object in the first direction. The second vibration isolation apparatus is configured to be disposed in a second direction of the target object, and the second vibration isolation apparatus is configured to slow down a vibration component of the target object in the second direction.

Based on the foregoing vibration isolation apparatus, when the target object is vibrated, the vibration isolation apparatus may simultaneously slow down the vibration in the first direction and the vibration in the second direction of the target object, to reduce mechanical fatigue of the target object, reduce a structural fracture risk and a performance degradation speed of the target object, and improve a service life of the target object.

In some embodiments, the first vibration isolation apparatus may include a first air spring and a second air spring. The first air spring is configured to be disposed on a top and a bottom of the target object, and the first air spring is configured to slow down a vibration component in a direction from the top to the bottom of the target object. The second vibration isolation apparatus may include at least one third air spring, the at least one third air spring is disposed around a side surface of the target object, and the at least one third air spring is configured to slow down a lateral vibration component of the target object.

The first air spring and a third air spring that is close to the first air spring may be an integral structure; or the first air spring may be fixedly connected to the third air spring that is close to the first air spring. A fastened connection manner may be bolt connection, or may be adhesive, but is not limited thereto.

Similarly, the second air spring and a third air spring that is close to the second air spring may be an integral structure; or the second air spring may be fixedly connected to the third air spring that is close to the second air spring. A manner of the fastened connection may include a detachable fastened connection and a non-detachable fastened connection. The detachable fastened connection may be a bolt connection, and the non-detachable fastened connection may be adhesive, but is not limited thereto.

The integral structure can improve connection reliability, and reduce a volume and costs of a connection part. The detachable fastened connection may flexibly replace types of the first air spring, the second air spring, and the third air spring, and has better adaptability. For the non-detachable fastened connection, in a manufacturing stage before the vibration isolation apparatus is delivered from a factory, types of the first air spring, the second air spring, and the third air spring are determined.

Based on the foregoing vibration isolation apparatus, when a sensor is vibrated, the vibration isolation apparatus may slow down vibration from a top to a bottom of the sensor and lateral vibration, to reduce mechanical fatigue of the sensor, reduce a fracture risk and a performance degradation speed of a sensor assembly, prolong a service life of the sensor, reduce a quantity of replacement times, reduce replacement costs, and also reduce impact of vibration on measurement precision of the sensor.

In some embodiments, the target object may be a sensor, for example, a laser radar. The first vibration isolation apparatus may include a first air spring and a second air spring. The first air spring is configured to be disposed on the top of the sensor, and the second air spring is configured to be disposed on the bottom of the sensor. The second vibration isolation apparatus may include at least one third air spring, and the at least one third air spring is disposed around a side surface of the sensor.

In some embodiments, the first air spring may be a single convoluted air spring, a double convoluted air spring, or the like, but is not limited thereto; the second air spring may be a single convoluted air spring, a double convoluted air spring, or the like, but is not limited thereto; and the third air spring is an annular air spring. Each annular air spring is sleeved on the side surface of the sensor.

In some other embodiments, the vibration isolation apparatus may be a plurality of air springs, and the plurality of air springs are disposed around the side surface of the sensor.

The air spring refers to a spring that is filled with compressed air in a telescopic sealed container and uses air elasticity, commonly referred to as an airbag or the like.

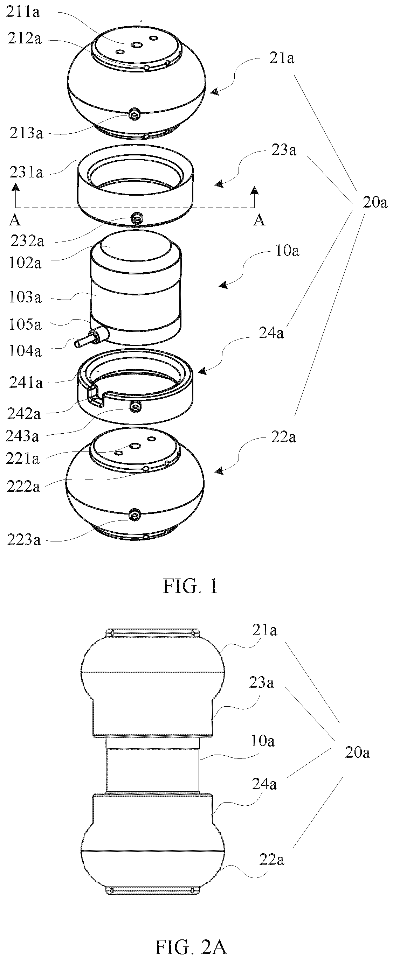

The following describes an example of a sensor assembly provided in embodiments of this application. FIG. 1 is a schematic exploded diagram of a sensor assembly according to some embodiments of this application. As shown in FIG. 1, the sensor assembly includes a sensor 10a and a vibration isolation apparatus 20a. The sensor 10a may be a laser radar. A type of the laser radar may be a millimeter-wave radar, a solid-state laser radar, or the like.

The vibration isolation apparatus 20a includes a first vibration isolation apparatus and a second vibration isolation apparatus. The first vibration isolation apparatus includes a first air spring 21a and a second air spring 22a. The second vibration isolation apparatus includes a third air spring 23a and a third air spring 24a.

The first air spring 21a is disposed on a top of the sensor 10a, and the second air spring 22a is disposed on a bottom of the sensor 10a. The third air spring 23a and the third air spring 24a are disposed around a side surface of the sensor 10a.

A bottom of the first air spring 21a is fixedly connected to the top of the sensor 10a; a top of the second air spring 22a is fixedly connected to the bottom of the sensor 10a; a top of the third air spring 23a is fixedly connected to the bottom of the first air spring 21a; and a bottom of the third air spring 24a is fixedly connected to the top of the second air spring 22a.

A plurality of positioning holes 211a are disposed on a top of the first air spring 21a, and the positioning holes 211a are configured to fixedly connect the first air spring 21a to an external fastening structure. A plurality of positioning holes 221a are disposed at the top of the first air spring 21a, and the positioning holes 221a are configured to fixedly connect the second air spring 22a to the external fastening structure.

The third air spring 23a and the third air spring 24a may be square or annular.

The following shows an example of a schematic assembly diagram of the sensor assembly in FIG. 1. For example, FIG. 2A is a front view of an assembly state of the sensor assembly shown in FIG. 1 according to some embodiments of this application. An assembly structure of the sensor 10a installed in the vibration isolation apparatus 20a may be shown in FIG. 2A.

In some embodiments, a connection part 231a is disposed on a top that is of the third air spring 23a and that is close to the first air spring 21a, a connection part is disposed on a bottom that is of the first air spring 21a and that is close to the third air spring 23a, and the connection part 231a of the third air spring 23a is fixedly connected to the connection part of the first air spring 21a.

In some embodiments, a connection part 241a is disposed on a top that is of the third air spring 24a and that is close to the second air spring 22a, a connection part is disposed on a bottom that is of the second air spring 22a and that is close to the third air spring 24a, and the connection part 241a of the third air spring 24a is fixedly connected to the connection part of the second air spring 22a.

In some embodiments, the connection part may be a screw hole, and the two connection parts are fixedly connected by using a bolt. In some other embodiments, the two connection parts may be fixedly connected through adhesive or integrated molding.

In some embodiments, the first air spring 21a may be a single convoluted air spring, the second air spring 22a may be a single convoluted air spring, the third air spring 23a may be an annular air spring, and the third air spring 24a may be an annular air spring. It may be understood that the single convoluted air spring is merely an example, and the single convoluted air spring may alternatively be replaced with another structure with a same function. This is not limited herein. Similarly, the annular air spring is merely an example, and the annular air spring may be replaced with another structure with a same function. This is not limited herein.

In some embodiments, the annular air spring may be disposed in a non-sensing area of the sensor 10a, because the sensing area of the sensor 10a is configured to transmit and receive a signal, and if the sensing area is blocked, detection precision of the sensor 10a is affected. If the side surface of the sensor 10a includes a sensing area and two non-sensing areas, and a sensing area is disposed between one non-sensing area and the other non-sensing area, the two annular air springs are respectively disposed in one non-sensing area and the other non-sensing area.

For example, the laser radar 10a includes a top protective cover 102a, a laser radar operating area 103a, a bottom protective cover 105a, and a harness plug 104a. The harness plug 104a is disposed on the bottom protective cover 105a. The laser radar operating area 103a is located between the top protective cover 102a and the bottom protective cover 105a. The laser radar operating area 103a is an optical path propagation area used to transmit and receive a laser, and obtains sensing data. The third air spring 24a is provided with a groove part 242a, and the groove part 242a is disposed on a perpendicular bisector between two adjacent air chambers in the at least two air chambers. The harness plug 104a may pass through the groove part 242a.

Because the laser radar operating area 103a is the optical path propagation area used to transmit and receive a laser, if another structure is disposed on the laser radar operating area 103a, precision of sensing data of the laser radar operating area 103a is affected. Because in some embodiments, the third air spring 23a and the third air spring 24a are sleeved on a part, other than the laser radar operating area 103a, on an outer side surface of the laser radar 10a, and the laser radar operating area 103a used for optical path propagation is reserved. For example, the first air spring 21a is sleeved on an outer side wall in a circumferential direction of the top protective cover 102a of the laser radar 10a. The second air spring 22a and the third air spring 23a are sleeved on an outer side wall in a circumferential direction of the bottom protective cover 105a of the laser radar 10a.

The sensor 10a may be a laser radar, or may be any other types of sensor.

In this embodiment of this application, the first air spring 21a, the second air spring 22a, the third air spring 23a, and the third air spring 24a may partially wrap and fasten the laser radar 10a, and do not block an optical path propagation path of the laser radar 10a. In this way, the vibration isolation apparatus provided in this embodiment of this application not only can isolate vibration of the laser radar 10a, but also cannot interfere with measurement of the laser radar 10a in a vibration isolation process. This reduces mechanical fatigue of the laser radar 10a, reduces a structural fracture risk and a performance degradation speed of the laser radar 10a, prolongs a service life of the sensor, and reduces impact of vibration on measurement precision of the laser radar 10a.

Structures of the first air spring 21a, the second air spring 22a, the third air spring 23a, and the third air spring 24a, and connections and position relationships between the first air spring 21a, the second air spring 22a, the third air spring 23a, and the third air spring 24a and the sensor 10a may be changed based on structural features of the sensor 10a, to meet vibration isolation requirements of the first air spring 21a, the second air spring 22a, the third air spring 23a, and the third air spring 24a for the sensor 10a.

In some embodiments, the sensor 10a is fixedly connected to the external fastening structure, the sensor 10a is disposed between the first air spring 21a and the second air spring 22a, and the first air spring 21a and the second air spring 22a clamp the sensor 10a. In this way, a center of gravity of the sensor 10a is effectively prevented from drifting and shaking, and additional vibration caused by an unstable center of gravity is effectively reduced. A fastened connection manner may be fastened connection by using a positioning hole.

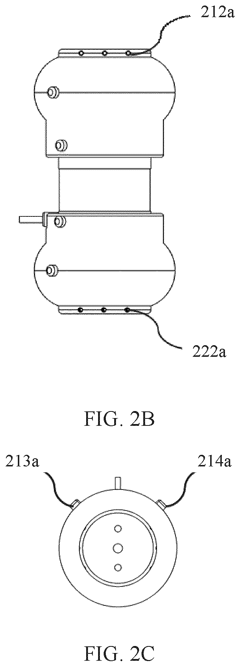

For example, FIG. 2B is a left view of the assembly state of the sensor assembly shown in FIG. 1 according to some embodiments of this application.

As shown in FIG. 2B, a plurality of positioning holes 212a are evenly distributed along an axial direction of the first air spring 21a. In some embodiments, the positioning holes 212a may be bolt holes. A plurality of positioning holes 222a are evenly distributed along an axial direction of the second air spring 22a. In some embodiments, the positioning holes 222a may be bolt holes.

In some embodiments, the first air spring 21a, the second air spring 22a, the third air spring 23a, and the third air spring 24a may be structures that can be filled with air.

Specifically, the structure that can be filled with air may be an air chamber that can be filled with air. For example, the first air spring 21a includes a first air chamber that can be filled with air; the second air spring 22a includes a second air chamber that can be filled with air; the third air spring 23a includes a plurality of third air chambers that are isolated from each other in a circumferential direction; and the third air spring 24a includes a plurality of third air chambers that are isolated from each other in a circumferential direction. The first air chamber, the second air chamber, and the third air chamber are filled with air, and when the sensor is vibrated, the first air chamber, the second air chamber, and the third air chamber can generate damping on the vibration, to slow down the vibration of the sensor 10a.

The first air spring 21a may be provided with an air supply structure configured to supply air to the first air chamber. For example, FIG. 2C is a top view of the assembly state of the sensor assembly shown in FIG. 1 according to some embodiments of this application. As shown in FIG. 2C, an intake valve 213a and an exhaust valve 214a are disposed on the top of the first air spring 21a, and the intake valve 213a is configured to connect to the air supply apparatus, and pass air into the first air chamber of the first air spring 21a. An air supply structure in the second air spring 22a is the same as the air supply structure in the first air spring 21a, and details are not described herein.

In some embodiments of this application, the intake valve and the exhaust valve are disposed on a same side of a circumferential diameter of an airway. In this way, to some extent, a connection distance between the intake valve and the air supply apparatus and a connection distance between the exhaust valve and the air supply apparatus may be shortened, a volume of the vibration isolation apparatus is reduced, and installation is convenient.

Each time the sensor 10a vibrates, a vibration direction in a radial direction may be different. Therefore, to facilitate decomposition and calculation of a physical quantity in a vibration control process, for example, to reduce each vibration more precisely and/or more conveniently decompose and calculate an acceleration. A plurality of independent, evenly distributed, and variable vibration isolation structures may be disposed in a circumferential direction of the third air spring 23a. In some embodiments, the vibration isolation structure is an air chamber. Specifically, the third air spring 23a includes a plurality of third air chambers that are isolated from each other and evenly distributed in a circumferential direction. In this way, precision of vibration control can be effectively improved, and calibration efficiency of the vibration isolation apparatus or the air spring can be further improved.

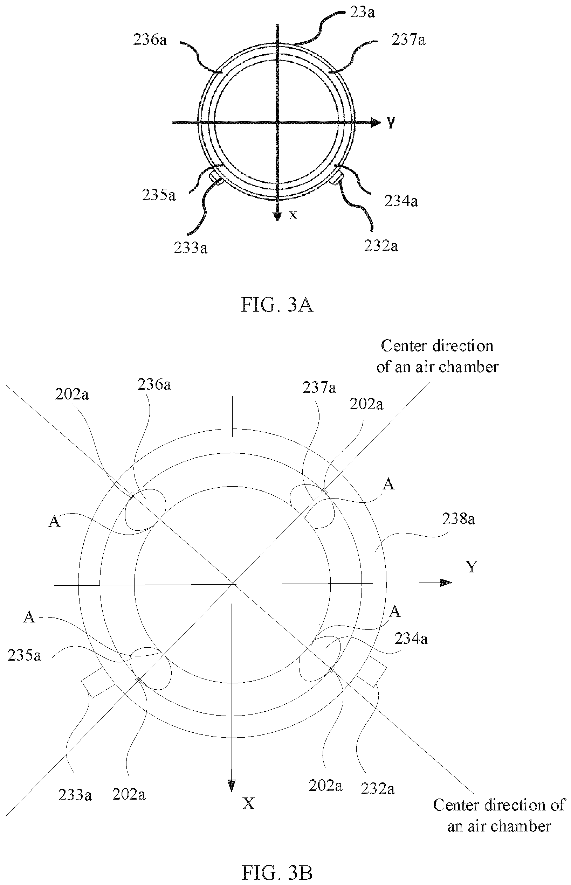

For example, FIG. 3A is a top view of the third air spring 23a in FIG. 1. As shown in FIG. 3A, four third air chambers are disposed at even intervals in a circumferential direction of the third air spring 23a: a third air chamber 234a, a third air chamber 235a, a third air chamber 236a, and a third air chamber 237a.

The third air chamber 234a, the third air chamber 235a, the third air chamber 236a, and the third air chamber 237a may be in various shapes. For example, FIG. 3B is a sectional view of the third air spring 23a in a direction A-A in FIG. 1 according to some embodiments of this application. As shown in FIG. 3B, the third air chamber 234a, the third air chamber 235a, the third air chamber 236a, and the third air chamber 237a have a same structure, and are all sealed chambers surrounded by a part of an inner wall of the third air spring 23a and an arc surface. The part of the inner wall of the third air spring 23a that forms the third air chamber 234a, the third air chamber 235a, the third air chamber 236a, and the third air chamber 237a is A, and an area of the area A is less than a preset area, so that mutual force between the third air chamber 234a, the third air chamber 235a, the third air chamber 236a, and the third air chamber 237a and the sensor 10a are more concentrated, a vibration reduction response effect of the sensor 10a is improved.

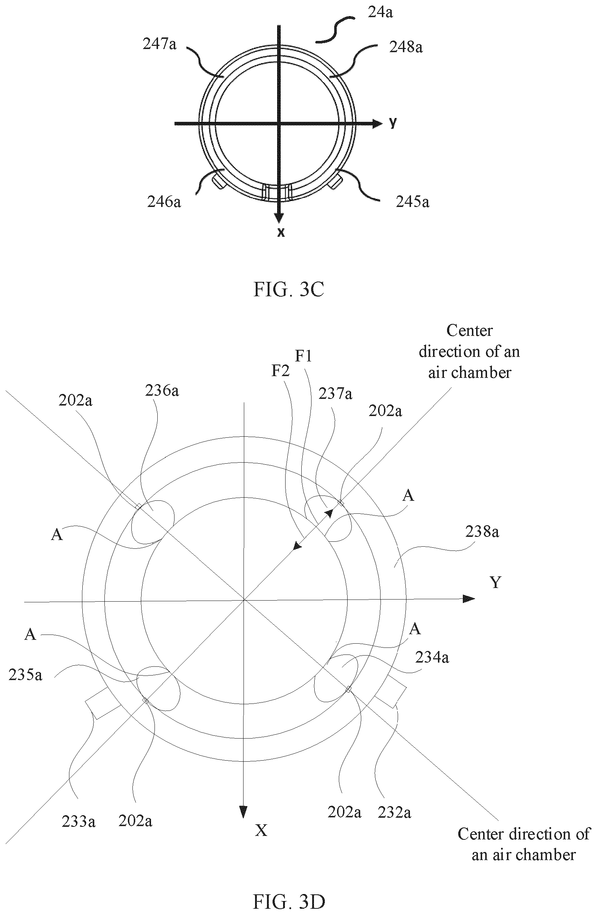

Similarly, a structure of the air chamber in the third air spring 24a is the same as that of the air chamber in the third air spring 23a. For example, FIG. 3C is a top view of the third air spring 24a in FIG. 1. As shown in FIG. 3C, four third air chambers are disposed at even intervals in a circumferential direction of the third air spring 24a, and the four third air chambers are vibration isolation structures: a third air chamber 245a, a third air chamber 246a, a third air chamber 247a, and a third air chamber 248a.

To slow down vibration of the sensor 10a when the sensor 10a is vibrated, barometric pressure values in the third air chamber 234a, the third air chamber 235a, the third air chamber 236a, and the third air chamber 237a need to be changed. Therefore, as shown in FIG. 3B, an airway 238a may be disposed in the circumferential direction of the third air spring 23a, and an intake valve 232a and an exhaust valve 233a are disposed on an outer side surface of the airway 238a. The intake valve 232a is configured to connect to the air supply apparatus, so that the air supply apparatus may inject air into the airway 238a by using the intake valve 232a.

The intake valve 232a and the exhaust valve 233a are disposed on a same side of a diameter of the third air spring 23a. In this way, to some extent, a connection distance between the intake valve 232a and an air supply apparatus and a connection distance between the exhaust valve 233a and the air supply apparatus may be shortened, a volume of the vibration isolation apparatus is reduced, and installation is convenient.

Control valves 202 are disposed between the third air chamber 234a, the third air chamber 235a, the third air chamber 236a, and the third air chamber 237a and the airway 238a, and a control valve 202 of a corresponding air chamber is opened, so that air in the airway 238a flows into the corresponding air chamber. Similarly, the third air spring 24a may also include a plurality of third air chambers that are isolated from each other in a circumferential direction, and the first air chamber, the second air chamber, and the third air chamber are filled with air.

The airway in this embodiment of this application is a pipe for air supply and exhaust, and may be an annular structure.

The control valve in this embodiment of this application may include a control valve, and further include another structure that can be used to control a switch. When the control valve is open, the air in the airway can be controlled to enter the air chamber. When the control valve is closed, the air in the airway can be prevented from entering the air chamber.

In some embodiments, the intake valve 232a and the exhaust valve 233a are disposed on the same side of the diameter of the third air spring 23a. In this way, to some extent, a connection distance between the intake valve 232a and an air supply apparatus and a connection distance between the exhaust valve 233a and the air supply apparatus may be shortened, a volume of the vibration isolation apparatus is reduced, and installation is convenient.

A shape of each third air chamber may be a spherical shape, for example, a flat sphere.

The air supply apparatus includes an air tank, an air pump, and an air path, where the air tank is connected to the air pump through the air path, and the air pump is connected to an intake valve in each vibration isolation apparatus through the air path. The air tank is an air supply source of the foregoing air chambers. The air pump provides power for the air tank and the air path through air supply.

Structures of the third air chamber, the control valve, the intake valve, the exhaust valve, and the airway in the third air spring 24a are the same as structures of the third air chamber, the control valve, the intake valve, the exhaust valve, and the airway in the second air spring 22a, and details are not described herein again.

To slow down vibration of the sensor 10a, damping and rigidity of the air spring are adjustable. In this way, when the sensor 10a is vibrated and acts on the air spring, the air spring generates, based on the adjusted damping and rigidity, force opposite to force used to cushion the sensor 10a towards the air spring, to slow down vibration of the sensor 10a. In addition, a larger value of an acceleration representing the vibration of the sensor 10a indicates larger damping and rigidity of the air spring that are adjusted; and on the contrary, a smaller value of an acceleration representing the vibration of the sensor 10a indicates smaller damping and rigidity of the air spring that are adjusted. The air spring may be any one or more of the first air spring 21a, the second air spring 22a, the third air spring 23a, and the third air spring 24a.

For example, FIG. 3D is a schematic diagram of a vibration reduction principle of the third air spring 24a in FIG. 3C. As shown in FIG. 3D, to slow down the vibration of the sensor 10a, the damping and rigidity of the third air spring 24a are adjustable. In this way, when the sensor 10a is vibrated and acts on the third air spring 24a, the third air spring 24a generates, based on the adjusted damping and rigidity, force F2 opposite to force F1 used to cushion the sensor 10a towards the third air spring 24a, to slow down the vibration of the sensor 10a. In addition, a larger value of the acceleration representing the vibration of the sensor 10a indicates larger damping and rigidity of the third air spring 24a that are adjusted; and on the contrary, a smaller value of the acceleration representing the vibration of the sensor 10a indicates smaller damping and rigidity of the third air spring 24a that are adjusted.

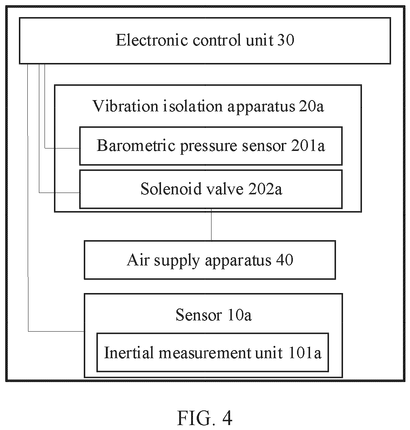

FIG. 4 is a schematic diagram of a vibration isolation system according to some embodiments of this application. As shown in FIG. 4, the vibration isolation system includes an electronic control unit 30, a vibration isolation apparatus 20a, a sensor 10a, and an air supply apparatus 40.

The vibration isolation apparatus 20a includes a barometric pressure sensor 201a and a control valve 202a. The barometric pressure sensor 201a is configured to measure a barometric pressure of each air chamber in the vibration isolation apparatus 20a. The control valve 202a is configured to adjust a volume of air entering each air chamber in the vibration isolation apparatus 20a.

An inertial measurement unit (Inertial Measurement Unit, IMU) 101a is built in the sensor 10a, and the inertial measurement unit 101a is configured to measure an acceleration when the sensor 10a vibrates. In some other embodiments, the inertial measurement unit 101a is disposed on a surface of the sensor 10a.

The control valve 202a is connected to the air supply apparatus 40. The barometric pressure sensor 201a, the control valve 202a, and the sensor 10a are separately connected to the electronic control unit 30. The electronic control unit 30 is configured to receive an acceleration that is sent by the inertial measurement unit 101b and that is generated when a laser radar 10b vibrates. The electronic control unit 30 determines, based on the acceleration, expected damping and expected rigidity of each air chamber. The electronic control unit 30 then determines an opening of the control valve based on the expected rigidity and expected damping of each air chamber, and sends a corresponding control valve opening adjustment instruction to each control valve. The electronic control unit 30 cyclically performs the foregoing steps in a next cycle, to reduce vibration of the sensor 10a in real time.

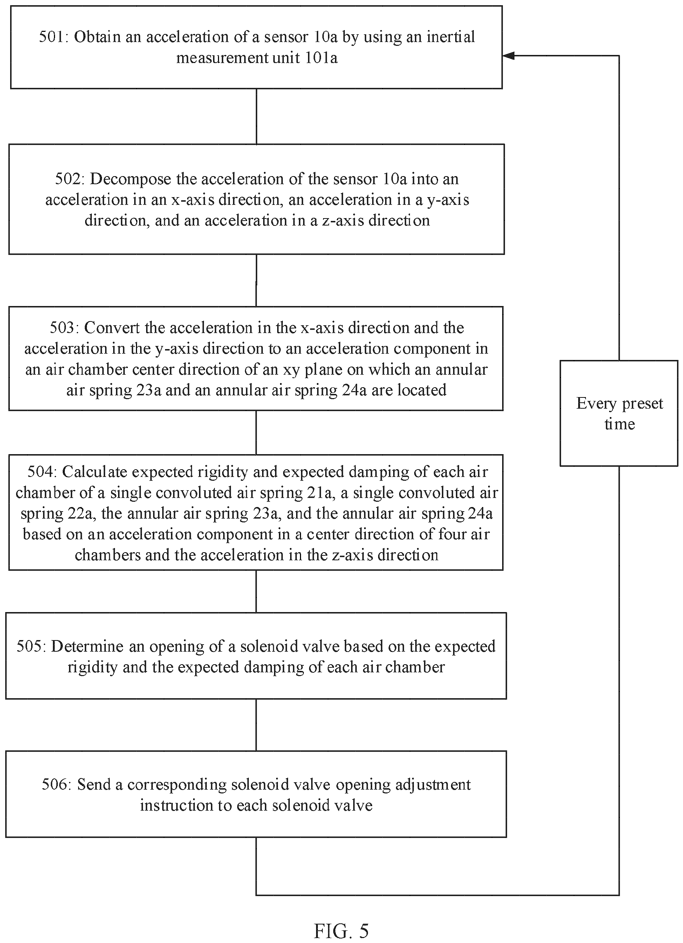

FIG. 5 is a schematic flowchart of a vibration isolation control method of a vibration isolation apparatus 20a corresponding to the vibration isolation apparatus 20a and FIG. 4 according to some embodiments of this application. The procedure may be executed by an electronic control unit (Electronic Control Unit, ECU) 30.

As shown in FIG. 5, the procedure includes the following steps.

501: Obtain an acceleration of a sensor 10a by using an inertial measurement unit 101a.

An acceleration of a laser radar in this embodiment of this application is used to indicate a current vibration status of the laser radar. In this embodiment of this application, the acceleration may be decomposed in a vibration direction of the laser radar, to determine vibration reduction degrees of a first air spring 21a, a second air spring 22a, a third air spring 23a, and a third air spring 24a for the sensor 10a. Therefore, a coordinate system needs to be established for an air chamber.

For example, as shown in FIG. 3A to FIG. 3D, four air chambers in the third air springs 23a and the third air springs 24a are distributed based on orthogonal coordinate system xy axes.

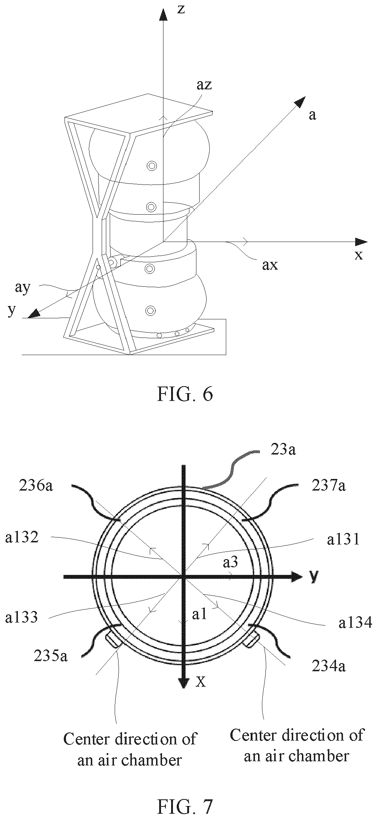

The third air spring 23a is used as an example. A direction of a center line between a midpoint of a connection line between an intake valve 232a and an exhaust valve 233a and a circle center of the third air spring 23a is a positive direction of the x-axis, and a direction of an axis upward from a bottom to a top of the third air spring 23a is a positive direction of a z-axis (as shown in FIG. 6 below, and not shown in FIG. 3A to FIG. 3D). A direction from a left side to a right side of the third air spring 23a is a positive direction of the y-axis, to establish an xyz spatial rectangular coordinate system, and is used for parameter calibration in actual use. Correspondingly, the intake valve 232a is located in a first quadrant of the xy orthogonal coordinate system, and the exhaust valve 233a is located in a second quadrant of the orthogonal coordinate system.

External vibrations conducted to the sensor 10a in different directions are decomposed along the xyz axes, so that the vibrations are converted to central directions of the four air chambers corresponding to the third air spring 23a to meet a lateral vibration isolation requirement. A part of the external vibration that is decomposed to the z-axis is converted to the first air spring 21a and the second air spring 22a, so that a vertical vibration isolation requirement is met.

For example, FIG. 6 is a schematic diagram of a principle in which the electronic control unit 30 decomposes the acceleration of the sensor 10a to components in directions of an x-axis, a y-axis, and a z-axis. As shown in FIG. 6, the electronic control unit 30 obtains the acceleration a of the sensor 10a by using the inertial measurement unit 101a, where the acceleration a has a specific angle with the x-axis, the y-axis, and the z-axis.

After a vehicle 1 is vibrated, the vibration is transmitted to the sensor 10a, and a vibration state of the sensor 10a may be reflected by the acceleration of the sensor 10a. Therefore, after the vehicle 1 is started, the inertial measurement unit 101 may measure the acceleration of the sensor 10a, and send the acceleration to the electronic control unit 30. In this way, the electronic control unit 30 may determine, based on the acceleration of the sensor 10a, expected damping and expected rigidity of each air chamber in response to the vibration state, to reduce the vibration of the sensor 10a, reduce mechanical fatigue of the sensor 10a, reduce a structural fracture risk and a performance degradation speed of the sensor 10a, and prolong a service life of the sensor.

Before the electronic control unit 30 performs this step, the electronic control unit 30 has controlled control valves 202 of air chambers in the first air spring 21a, the second air spring 22a, the third air spring 23a, and the third air spring 24a to supply a preset volume of air to the air chambers, so that internal pressures of the air chambers reach a preset value. In this way, when the vehicle 1 is vibrated and the vibration is transmitted to the sensor 10a, the first air spring 21a, the second air spring 22a, the third air spring 23a, and the third air spring 24a filled with the preset volume of air can have a vibration isolation effect on the laser radar 10.

502: Decompose the acceleration of the sensor 10a into an acceleration in an x-axis direction, an acceleration in a y-axis direction, and an acceleration in a z-axis direction.

For example, as shown in FIG. 6, the electronic control unit 30 decomposes the acceleration of the sensor 10a into an xy plane, and then decomposes force decomposed into the xy plane into the x-axis, to obtain an acceleration component ax1 of the acceleration a in the x-axis direction. Similarly, the electronic control unit 30 decomposes the acceleration of the sensor 10a into an xz plane, then decomposes force decomposed into the xz plane into the x-axis, to obtain an acceleration component ax2 of the acceleration a in the x-axis direction, and finally adds ax1 and ax2 to obtain a total acceleration component ax on the x-axis. By analogy, the electronic control unit 30 decomposes the acceleration of the sensor 10a into the y-axis, to obtain a total acceleration component ay of the acceleration a in the y-axis direction; and the electronic control unit 30 decomposes the acceleration of the sensor 10a into the z-axis, to obtain a total acceleration component az of the acceleration a in the z-axis direction.

503: Convert the acceleration in the x-axis direction and the acceleration in the y-axis direction to an acceleration component in an air chamber center direction of an xy plane on which the third air spring 23a and the third air spring 24a are located.

For example, according to some embodiments of this application, FIG. 7 is a schematic diagram of a principle of converting the acceleration in the x-axis direction and the acceleration in the y-axis direction to the acceleration component in the air chamber center direction of the xy plane on which the third air spring 23a is located according to some embodiments of this application. As shown in FIG. 7, the electronic control unit 30 obtains, based on the acceleration ax in the x-axis direction, the acceleration component ay in the y-axis direction, and an included angle between an acceleration a1 and a center direction of an air chamber, components a131, a132, a133, and a134 in a central line direction of each air chamber of the third air spring 23a and the third air spring 24a.

504: Calculate expected rigidity and expected damping of each air chamber of the first air spring 21a, the second air spring 22a, the third air spring 23a, and the third air spring 24a based on an acceleration component in a center direction of four air chambers and the acceleration in the z-axis direction.

As shown in FIG. 7, the four air chambers are evenly distributed along a circumferential direction. In this way, it is more convenient to decompose the acceleration to the x-axis and the y-axis, and perform acceleration decomposition calculation.

In this embodiment of this application, the expected rigidity of each air chamber is a capability of each air chamber in the first air spring 21a, the second air spring 22a, the third air spring 23a, and the third air spring 24a to resist elastic deformation when force is applied. The damping refers to a gradual decrease in vibration amplitude of any vibration system due to external actions or inherent reasons of the system. The damping helps reduce a resonance amplitude of a mechanical structure, to avoid mechanical damage caused by a vibration stress reaching a limit of the structure. In this embodiment of this application, the damping of each air chamber helps the sensor 10a quickly restore to a stable state after being subjected to an instantaneous impact, and vibration isolation and vibration reduction effects are high.

In some embodiments, the electronic control unit 30 calculates the expected damping and rigidity of each air chamber based on the acceleration component in the center direction of the four air chambers, the acceleration in the z-axis direction, and a preset collaborative control algorithm. The preset collaborative control algorithm may be a ceiling damping algorithm, a linear quadratic regulator (Linear Quadratic Regulator, LQR), or a model predictive control (Model Predictive Control, MPC) algorithm, but is not limited thereto.

505: Determine, based on the expected rigidity and the expected damping of each air chamber, an expected barometric pressure of each air chamber and an expected opening of a corresponding control valve.

Based on features of the air spring, the expected rigidity and expected damping of each air chamber correspond to the expected barometric pressure of each air chamber. To be specific, based on the expected barometric pressure of each air chamber and a fixed parameter of each air chamber, the expected barometric pressure of each air chamber and the fixed parameter of each air chamber may be converted into the expected rigidity and expected damping of each air chamber through theoretical calculation and experimental test calibration. In addition, the barometric pressure of each air chamber may be measured in real time by using a barometric pressure sensor. Therefore, the opening of the control valve 202 of each air chamber may be adjusted, so that the barometric pressure of each air chamber reaches the expected barometric pressure, and damping and rigidity of each air chamber reach an expected value.

The electronic control unit 30 may search, based on the expected rigidity and the expected damping of each air chamber, a mapping table of the rigidity, the damping, the opening of the control valve, and the barometric pressure, for the opening of the control valve of each air chamber and the expected barometric pressure of each air chamber.

506: Send a corresponding control valve opening adjustment instruction to each control valve, and then continue to perform step 501 at each preset time.

The control valve opening adjustment instruction carries the opening of the control valve of each air chamber and expected barometric pressure information of each air chamber. The electronic control unit 30 controls the barometric pressure of each air chamber to reach the expected rigidity and damping, and reduces vertical (z-axis) and lateral (xy plane) vibration of the sensor 10a based on collaborative control based on closed-loop feedback.

An embodiment of this application provides a computer-readable storage medium. The computer-readable storage medium stores instructions, and when the instructions are executed on an electronic device, the electronic device is enabled to perform the steps in the foregoing method embodiments.

In some cases, the disclosed embodiments may be implemented by hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the computer-readable medium may include any mechanism for storing or transmitting information in a computer (for example, a computer) readable form, including but not limited to a floppy disk, a compact disc, an optical disc, a read-only memory (CD-ROM), a magneto-optical disc, a read-only memory (Read-Only Memory, ROM), a random access memory (Random Access Memory, RAM), an erasable programmable read-only memory (Erasable Programmable Read-Only Memory, EPROM), an electrically erasable programmable read-only memory (Electrically Erasable Programmable Read-Only Memory, EEPROM), a magnetic card or an optical card, a flash memory, or a tangible computer-readable memory that transmits information (for example, a carrier wave, an infrared signal, a digital signal, or the like) through an internet through electrical, optical, acoustic, or other forms of transmission signals. Therefore, the computer-readable medium includes any type of computer-readable medium suitable for storing or transmitting electronic instructions or information in a computer-readable form (for example, a computer).

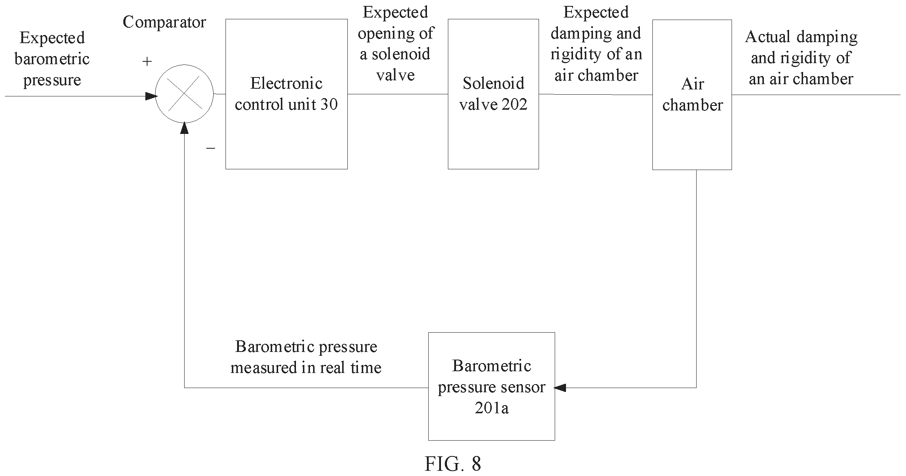

FIG. 8 is a schematic diagram of a principle of adjusting a barometric pressure of an air chamber according to a control valve opening adjustment instruction according to some embodiments of this application.

The air chamber in FIG. 8 may be any one of the first air spring 21a, the second air spring 22a, the third air spring 23a, and the third air spring 24a.

As shown in FIG. 8, the barometric pressure sensor 201a may measure a barometric pressure of an air chamber in real time. A comparator compares the barometric pressure measured in real time with an expected barometric pressure. If the barometric pressure is not equal to the expected barometric pressure, the electronic control unit 30 adjusts the opening of the control valve 202 based on the unequal comparison result and the determined opening of the control valve obtained in step 705, to adjust an air amount in the air chamber, so that the air chamber meets the expected barometric pressure as much as possible. In this way, the air chamber meets the expected damping and rigidity as much as possible.

If the vehicle 1 is always in a traveling state, because flatness of the mining road is different, a vibration degree of the vehicle 1 changes, and the acceleration of the sensor 10a also changes accordingly. Therefore, the electronic control unit 30 needs to periodically perform the control method of the vibration isolation apparatus 20a provided in this embodiment of this application, to slow down the vibration of the sensor 10a in real time, so as to improve an effect of slowing down the vibration of the sensor 10a.

The air spring, the vibration isolation apparatus, or the sensor assembly may not only be applied to an unmanned mining vehicle in the field of large-scale unmanned driving engineering operation, but also may be applied to another vehicle.

The vehicle in this application is a vehicle in a broad sense, and may be a vehicle (for example, a car, a truck, a motorcycle, a train, an airplane, or a ship), an industrial vehicle (for example, a forklift, a trailer, or a tractor), an engineering vehicle (for example, an excavator, a bulldozer, or a crane), an agricultural device (for example, a lawn mower or a harvester), a recreation device, or a toy vehicle. A type of the vehicle is not limited in this application.

The following describes the technical solutions of this application by using an example in which a sensor assembly is applied to an unmanned mining vehicle and a sensor is a laser radar.

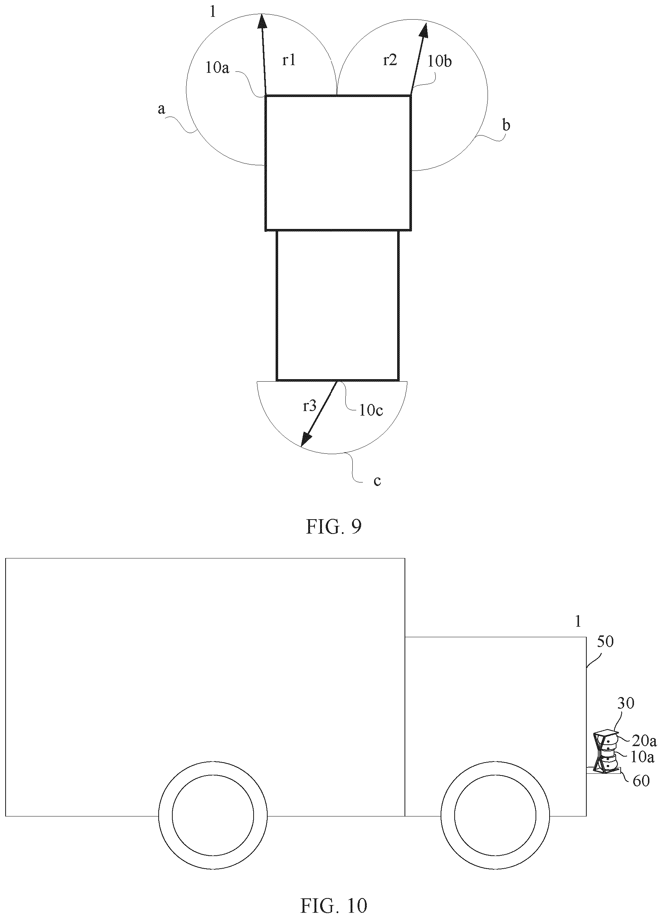

FIG. 9 is a top view of an unmanned mining vehicle according to some embodiments of this application.

As shown in FIG. 9, an unmanned mining vehicle 1 includes three groups of laser radars: a laser radar 10a, a laser radar 10b, and a laser radar 10c. The three groups of laser radars are respectively disposed at different positions on the unmanned mining vehicle 1. For example, the laser radar 10a and the laser radar 10b are respectively disposed at two ends of a vehicle head of the unmanned mining vehicle 1, and the laser radar 10c is disposed at a rear of the unmanned mining vehicle 1.

The three groups of laser radars are respectively configured to scan different areas. For example, the laser radar 10a is configured to scan a sector area a at a left end of the vehicle head that uses the laser radar 10a as a circle center and whose preset radius is r1, the laser radar 10b is configured to scan a sector area b at a right end of the vehicle head that uses the laser radar 10b as a circle center and whose preset radius is r2, and the laser radar 10c is configured to scan a sector area c at the rear of the vehicle that uses the laser radar 10c as a circle center and whose preset radius is r3.

A type of the laser radar may be a mechanical laser radar or a solid-state laser radar, but is not limited thereto.

FIG. 10 is a schematic diagram of a structure of a connection among a laser radar 10a, a vibration isolation apparatus 20a, and an unmanned mining vehicle 1 according to some embodiments of this application.

As shown in FIG. 10, the unmanned mining vehicle 1 includes a vehicle head 50, an iron frame 30, a support suspension beam 60, a laser radar 10a, and a vibration isolation apparatus 20a. The support suspension beam 60 is extended on the vehicle head of the unmanned mining vehicle 1, the iron frame 30 is vertically disposed on the support suspension beam 60, and the iron frame 30 is fixedly connected to the support suspension beam 60. An upper surface of the vibration isolation apparatus 20a is fixedly connected to the iron frame 30, and a lower surface of the vibration isolation apparatus 20a is fixedly connected to the iron frame 30.

The laser radar 10b and the vibration isolation apparatus 20b shown in FIG. 9 may alternatively be fixedly connected to the unmanned mining vehicle 1 by using the foregoing connection structure of the iron frame and the support suspension beam, and the laser radar 10c and the vibration isolation apparatus 20c may alternatively be fixedly connected to the unmanned mining vehicle 1 by using the foregoing connection structure of the iron frame and the support suspension beam. Details are not described herein again.

The laser radar 10a is installed on the support suspension beam 60 of the unmanned mining vehicle 1. The support suspension beam 60 is also referred to as a suspension beam structural part. Generally, the suspension beam has an inherent vibration frequency, and when a road surface is not evenly and conducted to the suspension beam, a first-order bending vibration pattern exists in a vibration mode of the suspension beam. Based on different parameters such as a material, a cross section, an inertial moment, and a height, there may also be second-order and third-order bending vibration patterns, and the stability of the sensor is affected. Even with vertical steel plate reinforcement, it is difficult to ensure that it is not affected by the vibration of the suspension beam in some vibration directions and frequencies.

However, because the laser radar 10a uses the vibration isolation apparatus 20a provided in this embodiment of this application, when the unmanned mining vehicle 1 travels on an unstructured road and is vibrated, because the first air spring 21a, the second air spring 22a, the third air spring 23a, and the third air spring 24a have damping, the damping helps reduce an amplitude of a deviation from an initial position generated due to vibration after the laser radar 10a is vibrated, so that the laser radar 10a recovers to a stable state as quickly as possible. The vibration isolation apparatus 20a performs vibration isolation in a vertical direction (for example, a direction perpendicular to a road surface) on the laser radar 10a by using the damping feature of the first air spring 21a and the second air spring 22a on the laser radar 10a, and performs vibration isolation in a horizontal direction perpendicular to an axial direction on the laser radar 10a by using the damping feature of the third air spring 23a and the third air spring 24a on the laser radar 10a. In this way, to some extent, the vibration of the laser radar 10a in a vertical direction (a y-axis direction) and a lateral direction (a non-y-axis direction) is reduced, mechanical fatigue of the laser radar 10a is reduced, a structural fracture risk and a performance degradation speed of the laser radar 10a are reduced, and a service life of the laser radar 10a is prolonged.

In conclusion, embodiments of this application have at least the following beneficial effects:

To some extent, the vibration isolation apparatus in embodiments of this application can effectively resolve a multi-dimensional vibration isolation problem of a sensor of a large engineering vehicle (for example, a mining vehicle) on a complex road surface such as a mine or a sensor on a suspension with poor performance, or prolong a life cycle of a precision sensor, to reduce costs.

To some extent, the vibration isolation apparatus in embodiments of this application can reduce measurement precision of a vibration-sensitive sensor.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. In a case that no conflict occurs, embodiments of this application and features in embodiments may be mutually combined. Therefore, the protection scope of this application shall be subject to the protection scope of the claims.

## Claims

1. An air spring, comprising an airway and at least two air chambers, wherein
the at least two air chambers comprise a first air chamber and a second air chamber;
the first air chamber and the second air chamber are distributed at an interval along the airway; and
the first air chamber is connected to the airway by using a first control valve, and the second air chamber is connected to the airway by using a second control valve.

2. The air spring according to claim 1, wherein the at least two air chambers further comprise a third air chamber and a fourth air chamber, wherein
the first air chamber, the second air chamber, the third air chamber, and the fourth air chamber are evenly distributed along the airway; and
the third air chamber is connected to the airway by using a third control valve, and the fourth air chamber is connected to the airway by using a fourth control valve.

3. The air spring according to claim 2, wherein the airway is annular, and the first air chamber, the second air chamber, and the third air chamber are evenly distributed along a circumferential direction of the airway.

4. The air spring according to claim 3, wherein the airway is further provided with an intake valve and an exhaust valve, and the intake valve and the exhaust valve are disposed on a same side of a circumferential diameter of the airway.

5. The air spring according to any one of claims 1 to 4, wherein each of the at least two air chambers is provided with a barometric pressure sensor.

6. The air spring according to any one of claims 1 to 5, further comprising a groove part, wherein the groove part is disposed on a perpendicular bisector between two adjacent air chambers in the at least two air chambers.

7. A vibration isolation apparatus, comprising a first air spring and a second air spring, wherein
the first air spring comprises a first airway, a first air chamber, and a second air chamber, wherein the first air chamber and the second air chamber are distributed at an interval along the first airway;
the first air chamber is connected to the first airway by using a first control valve, and the second air chamber is connected to the first airway by using a second control valve; and
the second air spring is configured to attenuate a vibration component perpendicular to a plane on which the first air spring is located.

8. The apparatus according to claim 7, wherein the first air spring further comprises a third air chamber and a fourth air chamber, wherein
the third air chamber is connected to the first airway by using a third control valve, and the fourth air chamber is connected to the first airway by using a fourth control valve;
the first airway is annular, and the first air chamber, the second air chamber, the third air chamber, and the fourth air chamber are evenly distributed along a circumferential direction of the first airway; and
the first air chamber, the second air chamber, the third air chamber, and the fourth air chamber are all provided with a barometric pressure sensor.

9. The apparatus according to claim 8, wherein the first airway is further provided with a first intake valve and a first exhaust valve, and the first intake valve and the first exhaust valve are disposed on a same side of a circumferential diameter of the first airway.

10. The apparatus according to any one of claims 7 to 9, wherein the first air spring and the second air spring are of an integral structure; or the first air spring is fixedly connected to the second air spring.

11. The apparatus according to any one of claims 7 to 10, further comprising a third air spring, a fourth air spring, and a bracket, wherein the second spring, the first spring, the third spring, and the fourth spring are sequentially arranged, the second air spring is fixedly connected to the bracket, and the fourth air spring is fixedly connected to the bracket;
the third air spring comprises a second airway, a fifth air chamber, a sixth air chamber, a seventh air chamber, and an eighth air chamber, wherein the second airway is annular, the second airway is further provided with a second intake valve and a second exhaust valve, and the second intake valve and the second exhaust valve are disposed on a same side of a circumferential diameter of the second airway;
the fifth air chamber, the sixth air chamber, the seventh air chamber, and the eighth air chamber are evenly distributed along a circumferential direction of the second airway, and the fifth air chamber, the sixth air chamber, the seventh air chamber, and the eighth air chamber are all provided with a barometric pressure sensor; and
the fourth air spring is configured to attenuate a vibration component perpendicular to a plane on which the third air spring is located, and the third air spring is fixedly connected to the fourth air spring.

12. The apparatus according to claim 11, wherein the bracket is configured to fixedly connect the vibration isolation apparatus to a vehicle.

13. The apparatus according to any one of claims 7 to 12, wherein both the second air spring and the fourth air spring are single convoluted air springs.

14. A sensor assembly, comprising a vibration isolation apparatus and a sensor, wherein
the vibration isolation apparatus comprises a first air spring and a second air spring, the first air spring is sleeved on a side surface of the sensor, the second air spring is disposed on a first end of the sensor, and the second air spring is configured to attenuate a vibration component perpendicular to a plane on which the first air spring is located;
the first air spring comprises a first airway, a first air chamber, a second air chamber, a third air chamber, and a fourth air chamber, wherein the first air chamber, the second air chamber, the third air chamber, and the fourth air chamber are evenly distributed along the airway; and
the first air chamber is connected to the first airway by using a first control valve, the second air chamber is connected to the first airway by using a second control valve, the third air chamber is connected to the airway by using a third control valve, and the fourth air chamber is connected to the airway by using a fourth control valve.

15. The sensor assembly according to claim 14, further comprising a third air spring and a fourth air spring, wherein the second spring, the first spring, the third spring, and the fourth spring are sequentially arranged, the third air spring is sleeved on a side surface of the sensor, and the fourth air spring is disposed on a second end of the sensor;
the third air spring comprises a second airway, a fifth air chamber, a sixth air chamber, a seventh air chamber, and an eighth air chamber, wherein the second airway is annular, the second airway is further provided with a second intake valve and a second exhaust valve, and the second intake valve and the second exhaust valve are disposed on a same side of a circumferential diameter of the second airway;
the fifth air chamber, the sixth air chamber, the seventh air chamber, and the eighth air chamber are evenly distributed along a circumferential direction of the second airway, and the fifth air chamber, the sixth air chamber, the seventh air chamber, and the eighth air chamber are all provided with a barometric pressure sensor; and
the fourth air spring is configured to attenuate a vibration component perpendicular to a plane on which the third air spring is located, and the third air spring is fixedly connected to the fourth air spring.

16. A vibration isolation control method, wherein the method is applied to a vibration isolation control system, the vibration isolation control system comprises an electronic control unit and an air spring, and the air spring comprises an airway and at least two air chambers, wherein
the at least two air chambers comprise a first air chamber and a second air chamber;
the first air chamber and the second air chamber are distributed at an interval along the airway; and
the first air chamber is connected to the airway by using a first control valve, and the second air chamber is connected to the airway by using a second control valve; and
the method comprises:
obtaining, by the electronic control unit, an acceleration of the sensor;
decomposing, by the electronic control unit, the acceleration to a component in a preset direction, and determining, by the electronic control unit, expected rigidity and damping of the air chamber based on the component in the preset direction;
determining an expected opening of each solenoid valve based on the expected rigidity and the damping; and
sending a corresponding solenoid valve opening adjustment instruction to each solenoid valve based on the expected opening.

17. A vehicle, wherein an air spring is disposed on the vehicle, and the air spring is the air spring according to any one of claims 1 to 6.

18. A computer-readable storage medium, wherein the computer-readable storage medium stores instructions, and when the instructions are executed on an electronic device, the electronic device is enabled to perform the vibration isolation control method according to claim 16.
